# EUROPEAN PATENT SPECIFICATION

(11) **EP 1 974 480 B1**
(45) Date of publication and mention of the grant of the patent: **22.12.2010**
(21) Application number: 06835569.2
(22) Date of filing: 29.12.2006
(51) Int. Cl.: H04W 24/00, H04W 52/02, H04W 80/00

(54) **DETERMINATION OF EFFECTIVE SLEEP PERIOD FOR A WIRELESS BROADBAND INTERNET (WiBro) TERMINAL BASED ON PREAMBLE MEASUREMENTS**
BESTIMMUNG DER EFFEKTIVEN SLEEP-PERIODE EINES DRAHTLOSEN BREITBAND-INTERNET (WiBro) GEEIGNETEN ENDGERÄTS GEMÄSS PRÄAMBEL-MESSUNGEN
DETERMINATION D'UNE PERIODE DE VEILLE EFFECTIVE POUR UN TERMINAL D'INTERNET A LARGE BANDE SANS FILS (WiBro) SELON DES MESURES SUR UN SIGNAL DE PREAMBULE

(30) Priority: 30.12.2005 KR 20050134622
(43) Date of publication of application: 01.10.2008
(73) Proprietor: Pantech Co., Ltd., Seoul 121-270 (KR)
(72) Inventor: JANG, Woo Jin, Seoul 138-040 (KR)
(74) Representative: Vogel, Andreas
(86) International application number: PCT/KR2006/005869
(87) International publication number: WO 2007/078118

(56) References cited:
- EP-A- 1 499 144
- WO-A2-2005/008359
- US-A1- 2003 224 731
- US-A1- 2005 049 012
- US-A1- 2005 059 437
- US-A1- 2005 170 801
- US-A1- 2005 197 171

## Description

### BACKGROUND OF THE INVENTION

FIELD OF THE INVENTION

The present invention relates to a wireless terminal and a method of determining a sleep mode of a terminal, and more particularly, to a terminal and a method of determining a sleep mode of a terminal, which can measure a strength of a preamble signal in a listening mode, independently control a sleep mode operation by comparing the strength with a threshold value, and perform a normal operation according to a predetermined indication signal.

DISCUSSION OF THE BACKGROUND

In a modem society, communication terminals are used for long distance communication devices by many people. In particular, a wireless broadband Internet (WiBro) terminal is a next generation communication terminal providing a mobile Internet function which enables many users to currently use a data service such as the Internet, and the like, regardless of a location.

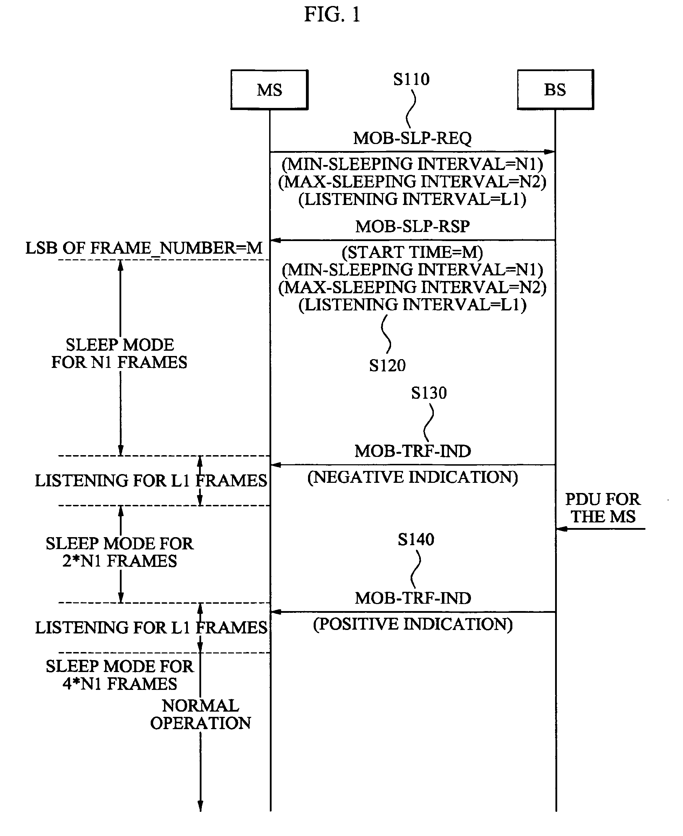

FIG. 1 is a flowchart illustrating a method of determining a sleep mode in a WiBro terminal according to a conventional art.

As illustrated in FIG. 1, a mobile station (MS) transmits a mobile sleep request (MOB_SLP_REQ) message to a base station (BS) at S110, and the BS transmits, via a mobile sleep response (MOB_SLP_RSP) message at S120, a parameter related to sleep such as Min_sleeping interval N1, Max_sleeping interval N2, Listening interval L1, and the like. Accordingly, the MS enables sleep and listening to repeat according to the parameters. Specifically, when the MS receives the MOB_SLP_RSP message from the BS, the MS first enters a sleep mode of at least Min_sleeping interval N1, enters an awake mode at Listening interval L1, and checks for information received from the BS.

In this instance, the BS receives a unit of a data block which is exchanged between two objects in a specific level of a protocol with respect to another mobile station, and is subdivided, i.e. a protocol data unit (PDU), and the BS transmits a mobile traffic indication (MOB_TRF_IND) message. In this instance, if a parameter in the MOB_TRF_IND message is negative at S130, the MS is changed into the sleep mode again. In this instance, a sleep interval is 2 * N1 frames corresponding to a double of a previous sleep interval. The 2 * N1 frames are counted at a point in which the sleep interval finally ends. Specifically, if a parameter in the MOB_TRF_IND message is negative, the sleep interval continuously increases until the sleep interval reaches Max_sleeping interval N2 by continuously doubling the previous sleep mode's sleep interval. However, if a parameter in the MOB_TRF_IND message is positive at S140, the MS does not enter a sleep mode, and operates in a listening mode of a normal operation state.

Accordingly, there is a problem that a WiBro standard communication method dependant on the BS does not effectively cope with a weak electromagnetic field or a communication environment in which electromagnetic waves are significantly varied. Specifically, if a WiBro terminal is in a state in which a channel environment is suddenly deteriorated, it may need to retrieve the BS at quicker sleep intervals, however, the BS may not be retrieved at quicker sleep intervals according to a conventional WiBro standard.

US 2005/0059437 A1 discloses a method for enabling a subscriber station to transit from a sleep mode to an awake mode in a broadband wireless access communication system. Therefore, a mobile subscriber station measures a signal quality in the broadband wireless access communication system in a predetermined time interval during a sleep mode and transits to the awake mode when the measured signal quality is less than a first threshold value.

EP 1 499 144 A1 discloses a mobile communication terminal for use in a mobile communication system including a base station and the mobile communication terminal in which the base station repeatedly transmits paging data a plurality of times in a transmission cycle. A wake-up period and a sleep period are alternately set in the mobile communication terminal. Therefore means for detecting reception quality of a signal transmitted from the base station in every wake-up period and means for measuring the stability of the detected reception are installed to change of a first discontinuous reception cycle to a second discontinuous reception cycle when the measured stability exceeds a threshold value.

Therefore, a WiBro terminal and a method of determining a sleep mode of a WiBro terminal, which can measure a strength of a preamble signal in a listening mode, independently control a sleep mode operation by comparing the strength with a threshold value, and perform a normal operation according to a predetermined indication signal, are required.

### SUMMARY OF THE INVENTION

The present invention provides a method of determining a sleep mode of a WiBro terminal, in which the WiBro terminal can actively use a strength of a preamble signal transmitted from a base station, and control a sleep interval.

The present invention also provides a WiBro terminal, which can provide a stable data service even in a weak electromagnetic field or a field having a bad communication environment.

According to an aspect of the present invention, there is provided a method according to claim 1. According to another aspect of the present invention, there is provided a computer-readable recording medium storing a program according to claim 5.

According to another aspect of the present invention, there is provided a WiBro terminal according to claim 6.

### BRIEF DESCRIPTION OF THE DRAWINGS

FIG. 1 is a flowchart illustrating a method of determining a sleep mode in a WiBro terminal according to a conventional art;

FIG. 2 is a flowchart illustrating a method of determining a sleep mode of a WiBro terminal according to an exemplary embodiment of the present invention;

FIG. 3 is a diagram illustrating a WiBro system according to an exemplary embodiment of the present invention; and

FIG. 4 is a block diagram illustrating an internal structure of a WiBro terminal according to an exemplary embodiment of the present invention.

### DETAILED DESCRIPTION OF THE ILLUSTRATED EMBODIMENTS

Reference will now be made in detail to embodiments of the present invention, examples of which are illustrated in the accompanying drawings, wherein like reference numerals refer to the like elements throughout. The embodiments are described below in order to explain the present invention by referring to the figures.

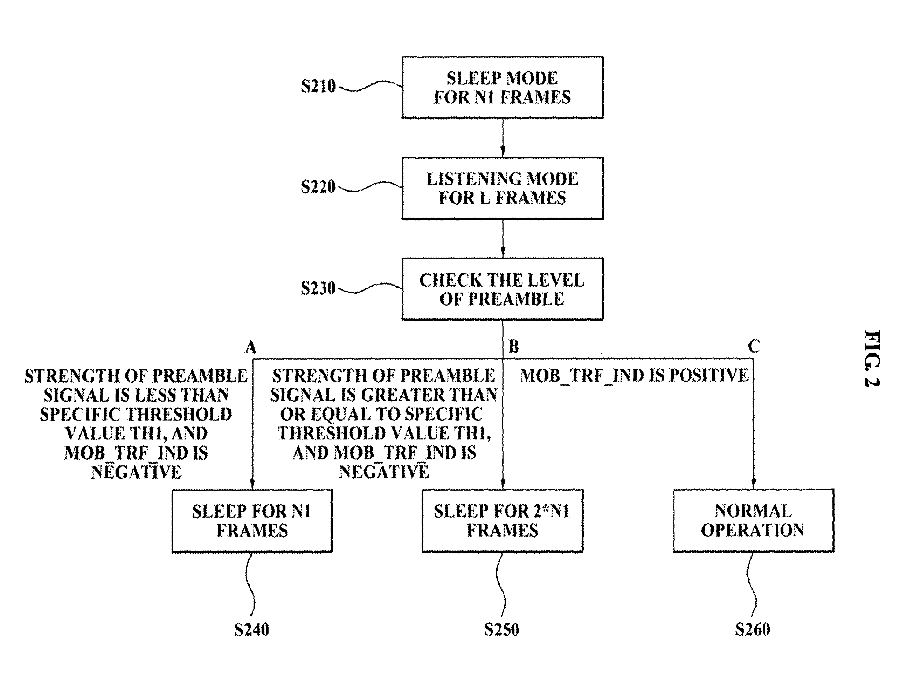

FIG. 2 is a flowchart illustrating a method of determining a sleep mode of a WiBro terminal according to an exemplary embodiment of the present invention.

First, a WiBro terminal operates in a sleep mode during an interval of N1 frames (S210). Next, the WiBro terminal enters an awake mode during an interval of L frames, and operates in a listening mode (S220). The WiBro terminal enters an awake mode during an interval of L frames in a listening mode, and measures a strength of a preamble signal in each frame (S230). Here, it is desirable that N1 and L indicate natural numbers.

When the strength of the preamble signal is measured, the WiBro terminal may be changed into a specific mode according to a predetermined condition, and may be divided into (A) an operation in which the WiBro terminal operates in the sleep mode during an interval of N1 frames again (S240), (B) an operation in which the WiBro terminal operates in the sleep mode during 2 * N1 frames again (S250), and (C) performing a normal operation in which the WiBro terminal exits the sleep mode, and transceives a data packet with a base station (S260).

Specifically, as illustrated in FIG. 2, the WiBro terminal compares the measured strength of the preamble with a specific threshold value TH1, and determines a next operation. The strength of the preamble signal, measured in the listening mode, may correspond to an average value of preamble signals during L frames in order to compare the strength with the specific threshold value TH 1.

In this instance, the threshold value TH1 is not a fixed, predetermined value, and may be varied according to an environment of a channel, and the like. Also, the threshold value TH1 may be updated, stored, and managed in a memory of the WiBro terminal. Specifically, the threshold value TH1 may be constantly varied according to an environment of a channel, or may be based on a value averaging, during a regular interval, of signal strengths of previous preambles. For example, the threshold value TH1 may be determined based on a value averaging, during 5L frames, of signal strengths of preambles measured in previous listening modes. In this instance, the determined and updated threshold value may become less than or greater than the previous threshold value, however, the exemplary embodiment of the present invention controls a sleep interval in order to cope with a bad electromagnetic environment according to the updated threshold value more quickly than existing inventions, so as not to significantly increase a sleep interval, and so as to maintain a high-quality data service. The threshold value TH1, which may be varied according to an environment of a communication channel, may be stored in the memory each time when updating, and may be used only when necessary.

If a radio wave environment using the WiBro terminal suddenly deteriorates, and the strength of the preamble signal, measured in the listening mode, becomes less than the threshold value TH1, maintaining the previous sleep interval (for example, N1 frames) rather than continuously increasing the sleep interval is a method of effectively, actively, and quickly coping with a state in which an environment of a channel around a terminal suddenly deteriorates, to maintain a high-quality data service. Also, the WiBro terminal receives a MOB_TRF_IND message from the base station, and performs a next operation according to the MOB_TRF_IND message.

Specifically, if the strength of the preamble signal, measured in the listening mode during the L frames, is less than the threshold value TH 1, and MOB_TRF_IND is negative, the WiBro terminal maintains a sleep mode during N1 frames (S240), and if the strength of the preamble signal, measured in the listening mode during the L frames, is greater than or equal to the threshold value TH 1, and MOB_TRF_IND is negative, the WiBro terminal maintains a sleep mode during 2 * N1 frames (S250). Also, if MOB_TRF_IND is positive, the WiBro terminal performs a normal operation (S260).

Also, the threshold value TH1 enables a value, which is constantly updated each time in which the strength of the preamble signal is compared with the threshold value TH1, to be applied. Also, the updated value may control a sleep interval of the WiBro terminal more effectively, based on a value, which averages values with respect to a previous radio wave environment, and is determined based on an average value, similar to the description above. Also, since preamble signals, measured in the listening mode in order to determine the threshold value TH1, may be designated as preamble signals during 5L frames, the WiBro terminal may measure the strength of the preamble signal during the designated 5L frames, and determine the threshold value TH1 based on the value, thereby selecting an operation from among the (A), (B), and (C) operations described above.

A method of determining a sleep mode of a WiBro terminal according to the above-described embodiment of the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. The media may also be a transmission medium such as optical or metallic lines, wave guides, and the like, including a carrier wave transmitting signals specifying the program instructions, data structures, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

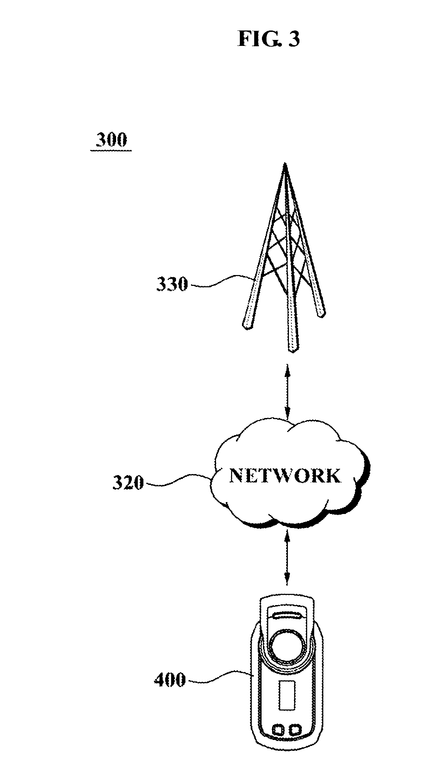

FIG. 3 is a diagram illustrating a WiBro system according to an exemplary embodiment of the present invention.

As illustrated in FIG. 3, a WiBro system 300 includes a WiBro terminal 400, a network 320, and a base station 330.

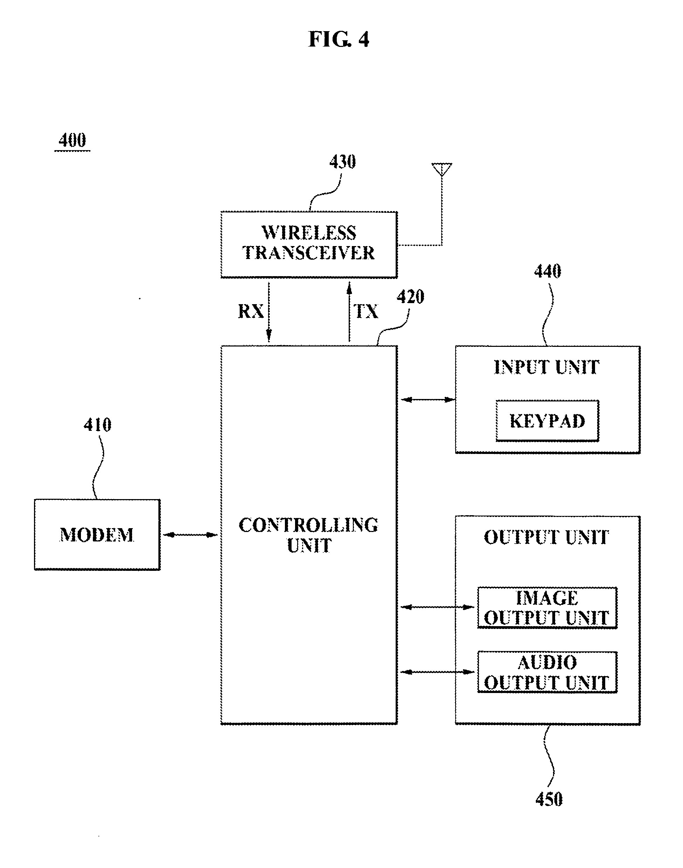

The WiBro terminal 400 is a communication terminal performing a WiBro function, and may receive various request messages, response messages, command messages, and the like from the base station 330 via the network 320. A WiBro indicates a wireless broadband Internet service technology which may be easily used while wireless mobile, e.g. a mobile communication terminal. When describing an example of the currently used WiBro, the WiBro uses a frequency of a band 2.3 GHz, supports mobility at speeds greater than 60 km/h, has a transmission speed corresponding to about 1 Mbps, and a transmission distance of the WiBro corresponds to maximum 48 km. Accordingly, there is an advantage that a service radius is wider than a wireless local area network (WLAN) used for only a service area referred to as "hot spot", and Wireless-Fidelity (Wi-Fi) by over ten times. Also, the WiBro is a communication technology having a compatibility with a World Interoperability for Microwave Access (WiMAX) corresponding to a WiBro service which is currently performed by Intel, combining with a Voice over Internet Protocol (VoIP) technology, and replacing a current Code Division Multiple Access (CDMA) mobile communication. The WiBro conforms to an international technology standard conforming to a next generation wireless broadband transmission technology standard which the Institute of Electrical and Electronics Engineers (IEEE) approves, i.e. IEEE 802.16e. The international technology standard is a WiBro technology standard, i.e. High-speed Portable Internet (HPi). A more detailed operation of the WiBro terminal 400 is described with reference to FIG. 4, as follows.

The network 320 indicates a communication network connecting between a mobile communication terminal and a fixed point, or between mobile communication terminals for each other, and various mobile communication principles such as a cellular mobile communication method, and the like, may be applied. Also, the network 320 is connected to a base station (BS) 330 relaying a transceiving radio wave of the WiBro terminal 400 as a wireless station which communicates with a portable electrical and electronic device, a gateway to connect the network 320 to the same or different type of communication networks and transceiving information between the communication networks, and the like.

The BS 330 is a wireless station which relays a transceiving radio wave of the WiBro terminal 400, is land based, and is immovable in order to perform a communication with a land mobile station, or a communication by relay of a mobile relay station as a wireless station for communicating with a portable electrical and electronic device. The BS 330 may include a base station system corresponding to a system configuring a base station in a mobile communication, and the base station system is divided into a Base Station Controller (BSC) and Base Transceiver Station (BTS). Also, the BSC performs a connection with various wired networks and a control of the BTS, and the BTS performs a wireless transmission with a mobile station. Also, the BS 330 according to the present invention may be a base station corresponding to a cell radius to which the WiBro terminal 400 belongs, or a plurality of base stations related to the WiBro terminal 400.

FIG. 4 is a block diagram illustrating an internal structure of a WiBro terminal 400 according to an exemplary embodiment of the present invention.

As illustrated in FIG. 4, the WiBro terminal 400 includes a modem 410, a controlling unit 420, a wireless transceiver 430, an input unit 440, and an output unit 450.

The modem 410 changes an analog signal received via the wireless transceiver 430 into a digital signal (demodulation), or changes a digital signal from the WiBro terminal 400 into an analog signal to transmit the digital signal. Also, an exemplary embodiment of the present invention processes a transceiving packet according to a WiBro communication protocol.

The controlling unit 420 controls a sleep mode, based on a preamble signal extracted from the modem 410. Also, the controlling unit 420 controls the WiBro terminal 400 to operate in a listening mode during an interval of L frames, after a sleep mode operation during an interval of N1 frames, measures a strength of the preamble signal in the listening mode when MOB_TRF_IND is negative, and compares the strength with a threshold value TH1. Similar to the description above, the strength of the preamble signal, measured in the listening mode, may be an average value of preamble signals during the interval of L frames, and the threshold value TH1 is determined based on a value averaging signal strengths of preambles during 5L frames measured in previous listening modes. The controlling unit 420 controls either a sleep mode operation during one interval of N1 frames, or a sleep mode operation during two intervals of N1 frames, resulting from the comparing. Also, the controlling unit 420 controls a normal operation when MOB_TRF_IND is positive. The MOB_TRF_IND message received from the base station may be included in the preamble signal, and may be processed in the modem 410. Accordingly, whether MOB_TRF_IND is positive or negative may be determined.

The controlling unit 420 performs overall control of each component of the WiBro terminal 400. Also, the controlling unit 420 generally includes a process function of processing all data in a communication terminal related to a modem Digital Signal Processor (DSP). The greater the number of DSPs for processing an internal signal such as a baseband signal and the like is, the more quickly an operation according to each mode is processed due to a quick process speed. The controlling unit 420 may use a Mobile Station Modem (MSM), a Digital Signal Processor (DSP), an Open Multimedia Application Platform (OMAP), and the like.

The wireless transceiver 430 performs a mobile communication service transceiving a radio wave with the BS 330, or transmits messages such as the MOB_SLP_REQ message, and the like to the BS 330, or receives messages such as the MOB_TRF_IND message, and the like from the BS 330.

The input unit 440 issues various commands to the WiBro terminal 400 or makes an establishment in the WiBro terminal 400. Also, at least one selected from the group consisting of a keypad, a touchscreen, a touchpad, a voice recognition module, and the like may be used for the input unit 440.

The output unit 450 is used for establishment of the WiBro terminal 400, or checking specific information. Also, at least one output unit from among an image output unit, an audio output unit, and a tactile output unit may be used for the output unit 450. The image output unit includes a liquid crystal display (LCD) included in the WiBro terminal 400, an organic light-emitting diode (LED), Plasma Display Panel (PDP), LED, and the like. Also, the audio output unit includes a speaker, an earphone, and the like, which may output various music such as a bell sound, a coloring, a Moving Picture Experts Group Audio Layer 3 (MP3) recording, and the like. Also, the tactile output unit uses a vibration motor, and the like.

Also, the WiBro terminal 400 is a portable electrical and electronic device. A portable device as used in the present specification includes mobile communication devices including a communication function, such as a Personal Digital Cellular (PDC) phone, a personal communication service (PCS) phone, a personal handyphone system (PHS) phone, a CDMA-2000 (1X, 3X) phone, a Wideband CDMA phone, a dual band/dual mode phone, a global system for mobile communication (GSM) phone, a mobile broadband system (MBS) phone, a Digital Multimedia Broadcasting (DMB) phone, a smart phone, and a cellular phone which perform a WiBro function described in the present invention; portable terminals such as a public switched telephone network (PSTN) terminal, a voice over Internet protocol (VoIP) terminal, a session initiation protocol (SIP) terminal, a media gateway control protocol (MGCP) terminal, a media gateway control (Megaco) terminal, a personal digital assistant (PDA), a hand-held PC, a notebook computer, a laptop computer, an MP3 player, and a mini disc (MD) player; and all types of hand-held based wireless communication devices including an International Mobile Telecommunication (IMT)-2000 terminal providing international roaming service and extended mobile communication service, and a Universal Mobile Telecommunication Service (UMTS) based terminal. Also, the portable device may include a predetermined communication module such as a CDMA module, a Bluetooth module, an Infrared Data Association (IrDA) module, a wired/wireless LAN card and a wireless communication device which is provided with a global positioning system (GPS) chip enabling tracking of a position via a GPS. Also, the portable device may include a microprocessor which can replay multimedia and perform a certain calculation operation.

Since a WiBro terminal for determining a sleep mode according to the present invention is described above, and contents described in exemplary embodiments in FIG. 2 may be applied to the present exemplary embodiment, hereinafter, a detailed description thereof is omitted.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. Therefore, it is intended that the scope of the invention be defined by the claims appended thereto and their equivalents.

According to an aspect of the present invention, there is provided a method of determining a sleep mode of a WiBro terminal, in which the WiBro terminal can actively use a strength of a preamble signal transmitted from a base station, and control a sleep interval, thereby effectively, actively, and quickly providing a stable data service even in a weak electromagnetic field or a field having a bad communication environment and reducing a battery consumption amount using a short sleep interval.

## Claims

1. A method of determining a sleep mode of a wireless broadband Internet WiBro terminal, the method comprising:
operating in a sleep mode during an interval of N1 frames in which N1 indicates a natural number;
operating in a listening mode during an interval of L frames in which L indicates a natural number, after the operating in the sleep mode;
measuring a strength of a preamble signal in the listening mode, and comparing the strength with a threshold value;
controlling further operation in the sleep mode, resulting from the comparing;
and performing a normal operation according to a predetermined indication signal received from a base station,
wherein the threshold value is determined based on an average of the preamble signals measured in a plurality of listening modes
**characterized in that** the controlling step results in either performing the sleep mode operation during one interval of N1 frames when the strength of the preamble signal, measured in the listening mode, is less than the threshold value, resulting from the comparing, or
performing the sleep mode operation during two intervals of N1 frames when the strength of the preamble signal, measured in the listening mode, is greater than or equal to the threshold value, resulting from the comparing.

2. The method of claim 1, wherein the strength of the preamble signal, measured in the listening mode, corresponds to an average value of preamble signals during the interval of L frames.

3. The method of claim 1, wherein the threshold value is varied according to an environment of a communication channel, or is determined based on a value averaging, during a regular interval, signal strengths of previous preambles, and is managed in a predetermined memory.

4. The method of claim 3, wherein the regular interval corresponds to 5L frames of previous listening modes.

5. A computer-readable recording medium storing a program for carrying out the steps of a method according to any one of claims 1 through 4, when the program is run on a processing unit arranged to control a sleep mode of a wireless broadband Internet WiBro terminal.

6. A wireless broadband Internet WiBro terminal comprising:
a modem which is arranged to process a transceiving packet according to a WiBro communication protocol; and
a controlling unit which is arranged to control a sleep mode, based on a preamble signal extracted from the modem,
wherein the controlling unit is arranged to control the WiBro terminal to operate in a listening mode during an interval of L frames in which L indicates a natural number, after a sleep mode operation during an interval of N1 frames in which N1 indicates a natural number, is arranged to measure a strength of the preamble signal in the listening mode, compares the strength with a threshold value, is arranged to control a sleep mode operation, resulting from the comparing, and is arranged to control a normal operation according to a predetermined indication signal which is generated and processed in the modem,
and the threshold value is determined based on an average of the preamble signals measured in a plurality of listening modes
**characterized in that** the controlling unit is arranged to control the WiBro terminal to perform
either the sleep mode operation during one N1 frames when the strength of the preamble signal, measured in the listening mode, is less than the threshold value, resulting from the comparing, or
the sleep mode operation during two intervals of N1 frames when the strength of the preamble signal, measured in the listening mode, is greater than or equal to the threshold value, resulting from the comparing.

7. The WiBro terminal of claim 6, wherein the threshold value is varied according to an environment of a communication channel, or is determined based on a value averaging, during a regular interval, signal strengths of previous preambles, and is managed in a predetermined memory.

8. The WiBro terminal of claim 7, wherein the regular interval corresponds to 5L frames of previous listening modes.

## Patentansprüche

1. Verfahren zum Bestimmen eines Schlafmodus eines drahtlosen Breitband-Internet-WiBro-Terminals, umfassend:
Betreiben in einem Schlafmodus während eines Intervalls von N1 Frames, wobei N1 eine natürliche Zahl bezeichnet;
Betreiben in einem Horchmodus während eines Intervalle von L Frames, wobei L eine natürliche Zahl bezeichnet, nach dem Betreiben im Schlafmodus;
Messen einer Stärke eines Präambelsignals im Horchmodus und Vergleichen der Stärke mit einem Schwellenwert;
Steuern des weiteren Betriebs im Schlafmodus als Ergebnis des Vergleichens;
und Durchführen eines normalen Betriebs gemäß eines vorherbestimmten, von einer Basisstation empfangenen Anzeigesignals,
wobei der Schwellenwert auf Basis eines Durchschnitts der in einer Mehrzahl von Horchmoden gemessenen Präambelsignale bestimmt wird,
**dadurch gekennzeichnet, dass** der Steuerschritt dazu führt, dass
der Schlafmodusbetrieb entweder während eines Intervalls von N1 Frames durchgeführt wird, wenn die Stärke des im Horchmodus gemessenen Präambelsignals geringer als der Schwellenwert ist, als Ergebnis des Vergleichens oder
der Schlafmodusbetrieb während zweier Intervalle von N1 Frames durchgeführt wird, wenn die Stärke des im Horchmodus gemessenen Präambelsignals größer als der oder gleich dem Schwellenwert ist, als Ergebnis des Vergleichens.

2. Verfahren nach Anspruch 1, wobei die Stärke des im Horchmodus gemessenen Präambelsignals einem Durchschnittswert der Präambelsignale während eines Intervalls von L Frames entspricht.

3. Verfahren nach Anspruch 1, wobei der Schwellenwert gemäß einer Umgebung eines Kommunikationskanals variiert wird oder auf Basis eines Werts bestimmt wird, der durch Mittelung während eines regulären Intervalls die Signalstärken vorhergehender Präambeln ermittelt wird, und in einem vorherbestimmten Speicher gemanagt wird.

4. Verfahren nach Anspruch 3, wobei das reguläre Intervall 5L Frames der vorhergehenden Horchmoden entspricht.

5. Computerlesbares Aufzeichnungsmedium, welches ein Programm zum Durchführen der Schritte eines Verfahrens gemäß einem der Ansprüche 1 bis 4 speichert, wenn das Programm in einer Verarbeitungseinheit abläuft, die darauf eingerichtet ist, einen Schlafmodus eines drahtlosen Breitband-Internet-WiBro-Terminals zu steuern.

6. Drahtloses Breitband-Internet-WiBro-Terminal, umfassend:
ein Modem, welches darauf eingerichtet ist, ein Sende-/Empfangspaket gemäß eines WiBro-Kommunikationsprotokolls zu verarbeiten; und
eine Steuereinheit, welche darauf eingerichtet ist, einen Schlafmodus auf Basis eines dem Modem entnommenen Präambelsignals zu steuern,
wobei die Steuereinheit darauf eingerichtet ist, das WiBro-Terminal zu steuern, um in einem Horchmodus während eines Intervalls von L Frames betrieben zu werden, wobei L eine natürliche Zahl bezeichnet, nach einem Schlafmodusbetrieb während eines Intervalls von N1 Frames, wobei N1 eine natürliche Zahl bezeichnet, darauf eingerichtet ist, eine Stärke des Präambelsignals im Horchmodus zu messen, vergleicht die Stärke mit einem Schwellenwert, darauf eingerichtet ist, einen Schlafmodusbetrieb als Ergebnis des Vergleichens zu steuern und einen normalen Betrieb gemäß eines vorherbestimmten Anzeigesignals zu steuern, welches Signal im Modem erzeugt und verarbeitet wird,
und der Schwellenwert auf Basis eines Durchschnitts der in einer Mehrzahl von Horchmoden gemessenen Präambelsignale bestimmt wird,
**dadurch gekennzeichnet, dass** die Steuereinheit darauf eingerichtet ist, das WiBro-Terminal zu steuern,
um entweder den Schlafmodusbetrieb während eines Intervalls von N1 Frames durchzuführen, wenn die Stärke des im Horchmodus gemessenen Präambeleignals geringer als der Schwellenwert ist, als Ergebnis des Vergleichens oder
um den Schlafmodusbetrieb während zweier Intervalle von N1 Frames durchzuführen, wenn die Stärke des im Horchmodus gemessenen Präambelsignals größer als der oder gleich dem Schwellenwert ist, als Ergebnis des Vergleichens.

7. WiBro-Terminal nach Anspruch 6, wobei der Schwellenwert gemäß einer Umgebung eines Kommunikationskanals variiert wird oder auf Basis eines Schwellenwerts bestimmt wird, der während eines regulären Intervalls die Signalstärken vorhergehender Präambeln mittelt, und in einem vorherbestimmten Speicher gemanagt wird.

8. WiBro-Terminal nach Anspruch 7, wobei das reguläre Intervall 5L Frames der vorhergehenden Horchmoden entspricht.

## Revendications

1. Procédé de détermination d'un mode de veille d'un terminal Internet à large bande sans fil WiBro, le procédé comprenant:
fonctionner dans un mode de veille durant un intervalle de N1 trames où N1 indique un nombre entier naturel,
fonctionner dans un mode d'écoute durant un intervalle de L trames où L indique un nombre entier naturel, après le fonctionnement dans le mode de veille,
mesurer une intensité d'un signal de préambule dans le mode d'écoute, et comparer l'intensité à une valeur de seuil,
commander un autre fonctionnement dans le mode de veille, résultant de la comparaison,
et exécuter un fonctionnement normal en fonction d'un signal d'indication prédéterminé reçu d'une station de base,
dans lequel la valeur de seuil est déterminée sur la base d'une moyenne des signaux de préambules mesurés dans une pluralité de modes d'écoute
**caractérisé en ce que** l'étape de commande résulte en
soit l'exécution du fonctionnement en mode de veille durant un intervalle de N1 trames lorsque l'intensité du signal de préambule, mesurée dans le mode d'écoute, est inférieure à la valeur de seuil, en conséquence de la comparaison,
soit l'exécution du fonctionnement en mode de veille durant deux intervalles de N1 trames lorsque l'intensité du signal de préambule, mesurée dans le mode d'écoute, est supérieure ou égale à la valeur de seuil, en conséquence de la comparaison,

2. Procédé selon la revendication 1, dans lequel l'intensité du signal de préambule, mesurée dans le mode d'écoute, correspond à une valeur moyenne de signaux de préambules durant l'intervalle de L trames.

3. Procédé selon la revendication 1, dans lequel la valeur de seuil est modifiée en fonction d'un environnement d'un canal de communication, ou est déterminée sur la base d'un calcul de moyenne de valeurs, sur un intervalle régulier, d'intensités de signaux de préambules précédents, et est gérée dans une mémoire prédéterminée.

4. Procédé selon la revendication 3, dans lequel l'intervalle régulier correspond à 5L trames de modes d'écoute précédents.

5. Support d'enregistrement lisible par un ordinateur mémorisant un programme pour effectuer les étapes d'un procédé selon l'une quelconque des revendications 1 à 4, lorsque le programme est exécuté sur une unité de traitement conçue pour commander un mode de veille d'un terminal Internet à large bande sans fil, WiBro,

6. Terminal Internet à large bande sans fil WiBro comprenant :
un modulateur-démodulateur qui est conçu pour traiter un paquet d'émission-réception conformément à un protocole de communication WiBro, et
une unité de commande qui est conçue pour commander un mode de veille, sur la base d'un signal de préambule extrait du modulateur-démodulateur,
dans lequel l'unité de commande est conçue pour commander le terminal WiBro afin de fonctionner dans un mode d'écoute durant un intervalle de L trames où L indique un nombre entier naturel, après un fonctionnement en mode de veille durant un intervalle de N1 trames où N1 indique un nombre entier naturel, est conçue pour mesurer une intensité du signal de préambule dans le mode d'écoute, compare l'intensité à une valeur de seuil, est conçue pour commander un fonctionnement en mode de veille, résultant de la comparaison, et est conçue pour commander un fonctionnement normal en fonction d'un signal d'indication prédéterminé qui est généré et traité dans le modulateur-démodulateur,
et la valeur de seuil est déterminée sur la base d'une moyenne de signaux de préambules mesurés dans une pluralité de modes d'écoute
**caractérisé en ce que** l'unité de commande est conçue pour commander le terminal WiBro afin d'exécuter
soit le fonctionnement en mode de veille durant un intervalle de N1 trames lorsque l'intensité du signal de préambule, mesurée dans le mode d'écoute, est inférieure à la valeur de seuil, en conséquence de la comparaison,
soit le fonctionnement en mode de veille durant deux intervalles de N1 trames lorsque l'intensité du signal de préambule, mesurée dans le mode d'écoute, est supérieure ou égale à la valeur de seuil, en conséquence de la comparaison.

7. Terminal WiBro selon la revendication 6, dans lequel la valeur de seuil est modifiée en fonction d'un environnement d'un canal de communication, ou est déterminée sur la base d'un calcul de moyenne de valeurs, sur un intervalle régulier, d'intensités de signaux de préambules précédents, et est gérée dans une mémoire prédéterminée.

8. Terminal WiBro selon la revendication 7, dans lequel l'intervalle régulier correspond à 5L trames de modes d'écoute précédents.
